# EUROPEAN PATENT SPECIFICATION

(11) **EP 1 264 423 B1**
(45) Date of publication and mention of the grant of the patent: **02.06.2004**
(21) Application number: 01927947.0
(22) Date of filing: 04.04.2001
(51) Int. Cl.: H04B 7/26, H04N 7/173, H04L 12/28

(54) **METHOD FOR CONTROLLING A TRANSMISSION**
VERFAHREN ZUR KONTROLLE EINER ÜBERTRAGUNG
PROCEDE DE CONTROLE D'UNE TRANSMISSION

(30) Priority: 17.04.2000 FI 20000921
(43) Date of publication of application: 11.12.2002
(73) Proprietor: TeliaSonera Finland Oyj, 00510 Helsinki (FI)
(72) Inventor: POHJANEN, Petri, FIN-90100 Oulu (FI); MATILAINEN, Arto, FIN-90420 Oulu (FI)
(74) Representative: Simmelvuo, Markku
(86) International application number: PCT/FI2001/000328
(87) International publication number: WO 2001/080460

(56) References cited:
- EP-A2- 0 786 876
- WO-A1-85/03830
- WO-A1-98/56181
- DE-A1- 4 424 380
- US-A- 5 898 680

## Description

### FIELD OF THE INVENTION

The present invention relates to telecommunication systems. In particular, the invention relates to a method for controlling the reception of a digital transmission and for receiving the additional information relating to a digital transmission by means of a terminal device, preferably a mobile station.

### BACKGROUND OF THE INVENTION

The next step from an analogue television transmission is the digital television transmission. The digital television transmissions enable different additional facilities in conjunction with the actual television transmission.

The reception of a radio, television or video transmission currently requires a specific receiver. If it is a question about a digital television transmission, the requirement is either a receiver which is able to receive digital transmission directly, or by means of a decoding device (Set-Top-Box) attached to a traditional television. For the decoding, a smart card is inserted into the decoding device by means of which the possible encryption of a television transmission is decoded. The user may have several different smart cards required for the following of different channels by means of which s(he) gains access to the digital television network by set-top box equipment each time used by him or her. The problem caused by the several separate channel-specific smart cards has been tried to solve, e.g. in such a way that the set-top box equipment has been equipped with several separate card reader devices.

The reference publication DE 4424380 describes a system where a terminal device (e.g. a set-top-box) is connected to a television in order to use value added services, e.g. pay TV or games. Because a traditional TV broadcast is one-way, interaction with the service providers is not possible. In the reference publication, the terminal device is connected to a communication network in order to provide return channel to the service providers. The connection is a wired or wireless connection. Due to the two-way connection, the user can subscribe e.g. TV network services to the set-top box. A user can acquire decoding information of a broadcast program and deliver the decoding information to the set-top box with a mobile terminal in order to decode the broadcast program.

The reference publication WO 8503830 describes a similar solution than DE 4424380. A two-way feature is arranged by a telephone line. The telephone line is connected directly to the subscriber unit (e.g. set-top box). The deciphering key is transmitted using the telephone line to the subscriber unit.

The above-mentioned solutions do not improve the position of the user in a situation in which s(he) would like to enable the following of a certain (encrypted) transmission or data information to be delivered in conjunction with the transmission by means of set-top box equipment each time used regardless of the place. Furthermore, the possible additional facilities connected with certain smart cards, enabled by the digital transmission are available only in a case when a relevant smart card has been inserted into the set-top box equipment. The possible additional services are available only via one user, and this is why the customized information services enabled by the digital transmission cannot be provided for each user separately.

### OBJECTIVE OF THE INVENTION

The objective of the invention is to eliminate the drawbacks referred to above or at least significantly to alleviate them. One specific objective of the invention is to disclose a new type of method which enables one to control a functionality connected with a digital transmission, preferably a television transmission, such as the coding of a television transmission and the reception of information to be delivered along with the television transmission flow by means of a terminal device, preferably a mobile station.

### BRIEF DESCRIPTION OF THE INVENTION

The present invention relates to the controlling of the equipment receiving a digital transmission, i.e. set-top box equipment, by means of a wireless terminal device, preferably a mobile station. In the invention, the use of a wireless terminal device compensates the smart card possibly required for the decoding of a digital transmission.

The invention also relates to a method for controlling the reception of a digital transmission and for receiving the additional information relating to a digital transmission into the terminal device in a telecommunication system comprising a terminal device, receiving equipment which is used to receive digital transmission, a first telecommunication connection which is arranged in between the terminal device and the receiving equipment, a service provider who provides the digital transmission, a second telecommunication connection along which the receiving equipment receives digital transmission from the service provider, a receiving server from which there is a connection to the service provider and a telecommunication network via which the receiving server and the terminal device are communicating with one another.

In the method the service provider sends digital information to the receiving equipment, which digital information is displayed on the receiving equipment or on some other device attached to it.

According to the invention, a connection is established between a terminal device and a receiving equipment. This is advantageously used to mean the fact that the terminal device and the receiving equipment are communicating with one another by a wireless or wired data transmission method. The wireless data transmission is advantageously used to refer to the Bluetooth technique. The menu connected with the digital transmission and the unambiguous identifier connected with the receiving equipment are transmitted from the receiving equipment to the terminal device. The digital transmission is used to mean, e.g. a digital radio transmission, a digital video transmission or a digital television transmission. The menu is transmitted to the terminal device advantageously in the WAP/WML form (WAP, Wireless Application Protocol; WML, Wireless Mark-up Language). The menu may be transferred to the terminal device also using some other corresponding menu-formed structure by some wireless or wired method using a protocol or description language understood by the terminal device. The wireless method is advantageously used to refer to the Bluetooth technique, but the method may be used to mean also any other corresponding wireless or wired connection-oriented data transmission channel or method of a short range.

The terminal device is advantageously used to mean a mobile station. The terminal device may, however, be any other wireless device from which there is a connection to some wireless network.

The unambiguous piece of identification information connected with the receiving equipment, the piece of identification information individualizing the terminal device and information relating to the digital transmission is sent from the terminal device to the receiving server. The unambiguous piece of identification information of the receiving equipment may be encrypted and/or signed before transmitting the piece of identification information. The piece of identification information has been encrypted, e.g. with the public encryption key of the service provider and signed with the private signing key of the receiving equipment.

The receiving server transmits the information received from the terminal device further to the service provider. Before transmitting the information the user may be certified by the receiving server. The certification means the user's right to perform the measures requested by him or her. The receiving server may add to the information to be transmitted to the service provider the digital signature of the user of the terminal device and/or of the receiving server. Therefore, the method may further comprise the steps of in the receiving server or the service provider identifying the user of the terminal device, and verifying that the user has predetermined rights for receiving the digital transmission.

The service provider sends the decoding key entitling to the decoding of the digital transmission to the terminal device of the user if the verification of the user was successful. The decoding key is sent to the terminal device preferably by way of the telecommunication network. The telecommunication network is advantageously used to refer to the mobile communication network. The decoding key may, in addition, be encrypted and/or signed before sending it to the terminal device. The aforementioned decoding key is transferred to the receiving equipment. The decoding key may transferred to the receiving equipment either automatically or via the measures taken by the user. The encrypted digital transmission received by the receiving equipment may now be decoded by means of the aforementioned decoding key.

In one preferred embodiment, data information relating to a digital transmission is being transmitted to the terminal device by way of the telecommunication network.

In one preferred embodiment, data information relating to a digital transmission is being transmitted to the terminal device via the receiving equipment.

In one preferred embodiment, feedback information relating to a digital transmission is sent from the terminal device to the receiving server and/or service provider.

Thanks to the present invention, a wireless terminal device, preferably a mobile station, can be connected as a part of an interactive transmission enabled by the digital transmission, thus enabling the independence of the place of reception of the transmissions. Furthermore, thanks to the present invention, there is no need to connect the receiving equipment (Set-Top-Box equipment) to a modem line.

Thanks to the invention, the user is no longer tied to use a separate card reader device with its several channel-specific cards, when s(he) wishes to follow a certain television transmission via a desired set-top-box equipment. Therefore, a user can follow a certain television transmission authorized by his/her predetermined rights via a desired set-top-box equipment. In addition, the invention enables the transmission of user-specific data information only for those users who want it. The decoding of a possible encryption and the identification of the viewer/viewers of a program happens based on a piece of unambiguous identification information of set-top-box equipment instead of a DigiTV smart card.

### BRIEF DESCRIPTION OF THE DRAWINGS

In the following section, the invention will be described in detail by the aid of a few examples of its embodiments, in which
Fig. 1 represents one advantageous system in which the method in accordance with the invention may be implemented.
Fig. 2 represents the functioning of the method in accordance with the invention by means of a signaling flow chart.

### BRIEF DESCRIPTION OF THE INVENTION

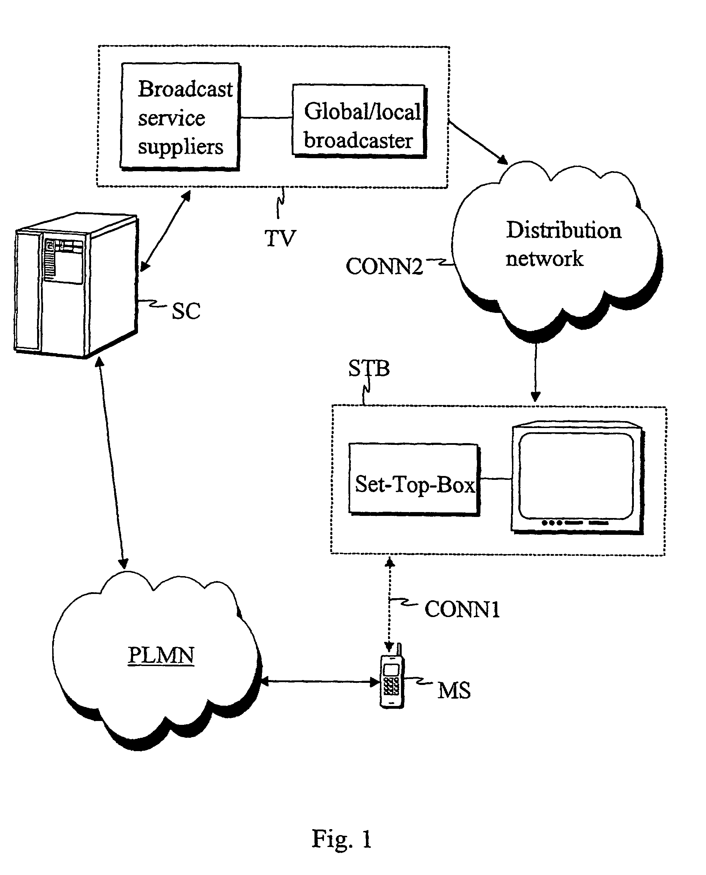

The example as shown by Figure 1 comprises a terminal device MS and receiving equipment STB. The terminal device MS and the receiving equipment STB are communicating with one another via a first telecommunication connection CONN1. The terminal device MS is advantageously used to mean a mobile station. The mobile station MS may, however, be any other wireless device from which there is a connection to some wireless network. The term receiving equipment STB refers to a configuration formed by one or more devices by means of which it is possible to receive and display digital television transmission. In this example, the receiving equipment STB consists of a decoding device (Set-Top-Box) and a television receiver.

The system as shown in Figure 1 comprises also a service provider TV, a second telecommunication connection CONN2, which transmits digital television transmission to the receiving equipment STB, and a receiving server SC. The receiving server SC is communicating with the terminal device MS via the telecommunication network PLMN. The telecommunication network PLMN is preferably a mobile communication network. The term service provider is in this example used to refer to an entity which produces and possible also transmits digital television transmission.

The first telecommunication connection CONN1 is advantageously used to mean a wireless connection. The telecommunication connection CONN1 may be used to mean also a wired connection. The wireless connection is, e.g. a Bluetooth connection. The Bluetooth connection is used to mean a radio network of a short range in which information may be transmitted in two ways. More information about the Bluetooth technique is available at the address www.bluetooth.com. The second telecommunication connection CONN2 is used to mean any connection between the service provider TV and the receiving equipment STB. This kind of connection is, e.g. a satellite connection or a cable connection.

In this example, the service provider TV consists of the actual producer of the digital transmission and of a receiver along which the digital television transmission is sent to the receiving equipment STB.

The receiving server SC acts as the recipient of the information sent by the terminal device MS and if necessary, transmits the received information further to the service provider TV.

In one embodiment as shown by Figure 1, the receiving equipment STB is used to mean equipment which is able to receive digital radio transmission.

In one embodiment as shown by Figure 1, the receiving equipment STB is used to mean equipment which is able to receive digital video transmission.

In one embodiment as shown by Figure 1, the receiving equipment STB is used to mean a game console and a display device connected to it.

In one embodiment as shown by Figure 1, the receiving equipment STB is used to mean a computer.

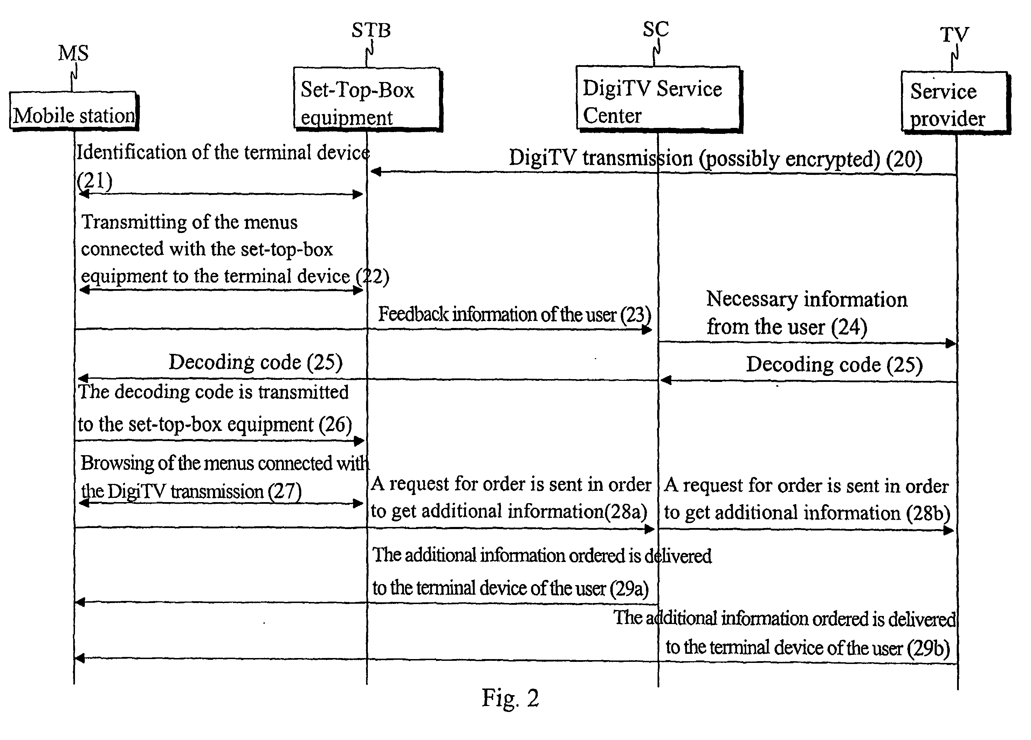

Fig. 2 is one advantageous flow chart illustrating the function of the present invention. The example as shown in Figure 2 comprises a mobile station MS, set-top-box equipment STB, a DigiTV Service Center SC and a service provider TV. The set-top-box equipment STB is used to refer to the receiving equipment presented in the claims and the DigiTV Service Center SC to the receiving server presented in the claims. Both the set-top-box equipment STB and the mobile station MS comprise the necessary facilities for using the Bluetooth technique. Furthermore, both of them are provided with the necessary facilities for using the WAP protocol. More information about the WAP protocol can be found at the address www.wapforum.org.

As shown by arrow 20, the service provider TV sends digital television transmission to the set-top-box equipment STB. The transmission has possibly been encrypted. The encryption is used to prevent the transmission from being seen by everybody. For decoding the transmission into a readable form, a specific decoding key is needed.

As shown by arrow 21, the mobile station MS is identified. The user is identified, e.g. based on a subscriber identity module (SIM, Subscriber Identity Module) or an unambiguous identifier attached to the Bluetooth part. The identification of the mobile station MS and its user happens, e.g. in such a way that having found a new terminal device supporting the Bluetooth interface in the near distance, the set-top-box equipment STB sends, either on the user's request or automatically, the menu corresponding to the set-top-box equipment or the menu or information connected with the digital television transmission to the user's terminal device. The automatic functionality as described above may be implemented in the set-top-box equipment STB, e.g. by means of the Java programming language. The menu is transmitted to the mobile station MS preferably in the WAP/WML form or as a menu-formed structure of a corresponding type. The menu may be transferred to the mobile station MS also using some other corresponding menu-formed structure by some wireless or wired method. The wireless method is advantageously used to refer to the Bluetooth technique, but the method may be used to mean also any other corresponding wireless or connection-oriented data transmission channel or method of a short range. Information to the mobile station MS and/or set-top-box equipment STB may be transmitted by any protocol or description language understood by the device or equipment. Examples of these are, e.g. HTTP (HTTP, Hyper-Text Transfer Protocol) and HTML (HTML, Hyper-Text Mark-up Language).

From the set-top-box equipment STB, the menu connected with the digital television transmission and/or set-top-box equipment STB is transmitted to the mobile station MS, arrow 22. The menu structure is transmitted to the mobile station MS, e.g. in the WML form over the Bluetooth connection. As displayed to the user, the menu structure corresponds to the normal management of WAP sites. In the same connection, the set-top-box equipment STB transmits the piece of unambiguous identification information associated with the equipment to the mobile station MS. This piece of identification information may be encrypted, e.g. with the public encryption key of the service provider utilizing the RSA algorithm (RSA, Rivest, Shamir, Adleman). Further, the piece of identification information may be signed with the private signing key associated with the set-top-box equipment STB.

The user of the mobile station MS acts in accordance with the instructions given by the menu presented and chooses to receive, e.g. the information relating to the television transmission in question. Further, the user may give, e.g. feedback information to the service provider TV or to the DigiTV Service Center SC, if s(he) wishes to order, e.g. a decoding key for a desired digital television transmission, arrow 23. The feedback information may be used to mean also, e.g. the payment of a transmission ordered, a voting measure etc. The transmission of information happens in such a way that the user selects the information desired by him or her and sends it preferably via the mobile communication network PLMN to the DigiTV Service Center SC. Along with this information is transmitted also the information needed in the identification of the user and the unique piece of identification information associated with the set-top-box equipment STB.

The DigiTV Service Center SC is used to mean equipment which enables subscriber-specific profiles of certain kind. The user is certified in the DigiTV Service Center SC. This is used to mean, e.g. that the piece of identification information received from the terminal device is compared to predetermined rights of use which define the users who have the right to use the services connected with the digital television transmission. In addition to this, the DigiTV Service Center SC enables one to implement the payment of the transmission before ordering the actual decoding code.

The feedback information received by the DigiTV Service Center SC from the mobile station MS, or part of the received information is forwarded further to the service provider TV, arrow 24. To the information to be forwarded further on, the digital signature of both of the user and of the DigiTV Service Center SC may be added. The service provider TV acts in accordance with the order received by the user and sends the decoding key needed in decoding the television transmission to the mobile station MS of the user either directly via the mobile communication network PLMN or via the DigiTV Service Center SC, arrow 25. The decoding key to be sent to the user may be encrypted and/or signed before the transmission.

When the mobile station MS has received the decoding key certified by the service provider TV, it is made available to the set-top-box equipment STB either automatically or via measures taken by the user, arrow 26. Now the user may follow the digital transmission certified by him or her. The user may browse the possible menus of information of data type to be sent in conjunction with the digital transmission, such as information about an individual sportsman to be transmitted on request. In case a certain user in the vicinity of the set-top-box equipment wishes that data-formed information of certain type is delivered separately to his or her terminal device, s(he) gives an order via the mobile communication network PLMN aided either by the DigiTV Service Center SC, arrow 28a, or directly to the service provider TV, arrow 28b. The desired information is delivered to this separate user located in the vicinity of the set-top-box equipment STB to his or her terminal device either via the set-top-box equipment STB or via the telecommunication network PLMN. As the sender of the information acts the DigiTV Service Center SC, arrow 29a, or the service provider TV, arrow 29b.

In the above example it has been presented that the DigiTV Service Center SC and the service provider TV are two different entities. In an embodiment as shown in Figure 2, the DigiTV Service Center SC and the service provider TV are used to mean the one and the same entity.

In an embodiment as shown in Figure 2, in the vicinity of the set-top-box equipment, the viewers of a digital television transmission are certified. Therefore, it is possible, deviating from a normal Formula One transmission, to deliver the information of one or more drivers to the terminal device of a separate viewer who has separately ordered the information and paid for it. At the same time the other viewers read the information sent in conjunction with a normal television transmission either in a television receiver or in their own known terminal devices.

The invention is not restricted merely to the examples as referred to above, instead many variations are possible within the scope of the inventive idea defined by the claims.

## Claims

1. A method for controlling the reception of a digital transmission and for receiving the additional information relating to a digital transmission in a telecommunication system comprising a terminal device (MS), receiving equipment (STB) which is used to receive digital transmission, a first telecommunication connection (CONN1) which is arranged in between the terminal device (MS) and the receiving equipment (STB), a service provider (TV) which produces digital transmission, a second telecommunication connection (CONN2) along which the receiving equipment (STB) receives digital transmission from the service provider (TV), a receiving server (SC) from which there is a connection to the service provider (TV), a telecommunication network (PLMN) via which the receiving server (SC) and the terminal device (MS) communicate with one another, wherein the method comprises the steps of:
sending from the service provider (TV) digital information to the receiving equipment (STB);
establishing a connection between the terminal device (MS) and the receiving equipment (STB);
transmitting from the receiving equipment (STB) the menu connected with the digital transmission and the piece of unambiguous identification information connected with the receiving equipment (STB) to the terminal device (MS);
sending from the terminal device (MS) the piece of unambiguous identification information connected with the receiving equipment (STB), the piece of identification information individualizing the terminal device (MS) and information relating to the digital transmission to the receiving server (SC);
transmitting from the receiving server (SC) information received from the terminal device (MS) to the service provider (TV);
in the receiving server (SC) or the service provider (TV) identifying the user of the terminal device (MS) and verifying that the user has predetermined rights for the digital transmission; and in response to a successful verification,
sending from the service provider (TV) the decoding key entitling to the decoding of the digital transmission to the terminal device (MS) of the user;
transferring from the terminal device (MS) the aforementioned decoding key to the receiving equipment (STB);
decoding the digital transmission received with the aforementioned decoding key in the receiving equipment (STB); and
displaying the digital information on the receiving equipment (STB) or on some other device attached to it.

2. The method according to claim 1, **characterized in that** the piece of unambiguous identification information connected with the receiving equipment (STB) is encrypted and/or signed.

3. The method according to claim 1, **characterized in that** the decoding key entitling to the decoding of the digital transmission is encrypted and/or signed before sending it to the terminal device (MS).

4. The method according to any one of the preceding claims 1, 2 or 3, **characterized in that** the terminal device (MS) is a mobile station.

5. The method according to any one of the preceding claims 1, 2, 3 or 4, **characterized in that** the telecommunication network (PLMN) is a mobile communication network.

6. The method according to any one of the preceding claims 1, 2, 3, 4 or 5, **characterized in that** the decoding key entitling to the decoding of the digital transmission is sent to the terminal device (MS) by way of the telecommunication network (PLMN).

7. The method according to any one of the preceding claims 1, 2, 3, 4, 5 or 6, **characterized in that** data information relating to the digital transmission is transmitted to the terminal device (MS) by way of the telecommunication network (PLMN).

8. The method according to any one of the preceding claims 1, 2, 3, 4, 5, 6 or 7, **characterized in that** data information relating to the digital transmission is transmitted to the terminal device (MS) via the receiving equipment (STB).

9. The method according to any one of the preceding claims 1, 2, 3, 4, 5, 6, 7 or 8, **characterized in that** the costs resulting from the chosen services are defined in the receiving server (SC).

10. The method according to any one of the preceding claims 1, 2, 3, 4, 5, 6, 7, 8 or 9, **characterized in that** the communication between the terminal device (MS) and the receiving equipment (STB) is implemented by a wireless or wired data transmission method.

11. The method according to any one of the preceding claims 1, 2, 3, 4, 5, 6, 7, 8, 9 or 10, **characterized in that** the communication between the terminal device (MS) and the receiving equipment (STB) is implemented by a Bluetooth connection.

12. The method according to any one of the preceding claims 1, 2, 3, 4, 5, 6, 7, 8, 9, 10 or 11, **characterized in that** feedback information relating to the digital transmission is sent from the terminal device (MS) to the receiving server (SC) and/or to the service provider (TV).

13. The method according to any one of the preceding claims 1, 2, 3, 4, 5, 6, 7, 8, 9, 10, 11 or 12, **characterized in that** the menu connected with the digital transmission is sent from the receiving equipment (STB) to the terminal device (MS) in the WAP/WML form or as a menu-formed structure of corresponding type by a protocol or description language understood by the terminal device (MS).

14. The method according to any one of the preceding claims 1, 2, 3, 4, 5, 6, 7, 8, 9, 10, 11, 12 or 13, **characterized in that** the user is certified in the receiving server (SC) before sending the information to the service provider (TV).

15. The method according to any one of the preceding claims 1, 2, 3, 4, 5, 6, 7, 8, 9, 10, 11, 12, 13 or 14, **characterized in that** to the information to be sent from the receiving server (SC) to the service provider (TV), the digital signature of the user of the terminal device (MS) and/or of the receiving server is added.

16. The method according to any one of the preceding claims 1, 2, 3, 4, 5, 6, 7, 8, 9, 10, 11, 12, 13, 14 or 15, **characterized in that** the digital transmission is used to mean a digital television transmission.

17. The method according to any one of the preceding claims 1, 2, 3, 4, 5, 6, 7, 8, 9, 10, 11, 12, 13, 14, 15 or 16, **characterized in that** the digital transmission is used to mean a digital video transmission.

18. The method according to any one of the preceding claims 1, 2, 3, 4, 5, 6, 7, 8, 9, 10, 11, 12, 13, 14, 15, 16 or 17, **characterized in that** the digital transmission is used to mean a digital radio transmission.

## Patentansprüche

1. Verfahren zum Steuern des Empfangs einer digitalen Übertragung und zum Empfangen der zusätzlichen Information bezüglich einer digitalen Übertragung in einem Telekommunikationssystem mit einem Terminalgerät (MS), einer Empfangsanlage (STB), die zum Empfangen einer digitalen Übertragung verwendet wird, einer ersten Telekommunikationsverbindung (CONN1), die zwischen dem Terminalgerät (MS) und der Empfangsanlage (STB) angeordnet ist, einem Serviceprovider (TV), der digitale Übertragung erzeugt, einer zweiten Telekommunikationsverbindung (CONN2), mit der die Empfangsanlage (STB) digitale Übertragung von dem Serviceprovider (TV) empfängt, einem Empfangsserver (SC), von welchem eine Verbindung zu dem Serviceprovider (TV) existiert, einem Telekommunikationsnetzwerk (PLMN), über das der Empfangsserver (SC) und das Terminalgerät (MS) miteinander kommunizieren, umfassend folgende Schritte:
von dem Serviceprovider (TV) wird Digitalinformation an die Empfangsanlage (STB) gesendet;
zwischen dem Terminalgerät (MS) und der Empfangsanlage (STB) wird eine Verbindung eingerichtet;
von der Empfangsanlage (STB) wird an das Terminalgerät (MS) das mit der digitalen Übertragung verbundene Menü sowie das Stück eindeutiger Kennungsinformation in Verbindung mit der Empfangsanlage (STB) übertragen;
von dem Terminalgerät. (MS) wird das Stück eindeutiger Kennungsinformation in Verbindung mit der Empfangsanlage (STB), das Stück Kennungsinformation, welches das Terminalgerät (MS) individualisiert, und Information bezüglich der digitalen Übertragung an den Empfangsserver (SC) gesendet;
von dem Empfangsserver (SC) wird von dem Terminalgerät (MS) empfangene Information an den Serviceprovider (TV) übertragen;
in dem Empfangsserver (SC) oder dem Serviceprovider (TV) erfolgt eine ldentifizierung des Benutzers des Terminalgeäts (MS) und eine Verifizierung, dass der Benutzer vorbestimmte Rechte für die digitale Übertragung besitzt; und ansprechend auf ein erfolgreiches Verifizieren folgen:
von dem Serviceprovider (TV) wird der Dekodierschlüssel an das Terminalgerät (MS) des Benutzers gesendet, welcher zum. Dekodieren der digitalen Übertragung berechtigt;
von dem Terminalgerät (MS) wird der erwähnte Dekodierschlüssel an die Empfangsanlage (STB) transferiert;
die mit. Hilfe des erwähnten Dekodierschlüssels wird mit der Empfangsanlage (STB) die empfangene digitale Übertragung dekodiert; und
die digitale Information wird auf der Empfangsanlage (STB) oder auf einem anderen damit verbundenen Gerät angezeigt.

2. Verfahren nach Anspruch 1, **dadurch gekennzeichnet, dass** das Stück eindeutiger Kennungsinformation in Verbindung mit der Empfangsanlage (STB) verschlüsselt und/oder signiert ist.

3. Verfahren nach Anspruch 1, **dadurch gekennzeichnet, dass** der zum Dekodieren der digitalen Übertragung berechtigende Dekodierschlüssel vor dem Senden an das Terminalgerät (MS) verschlüsselt und/oder signiert wird.

4. Verfahren nach einem der Ansprüche 1, 2, 3, **dadurch gekennzeichnet, dass** das Terminalgerät (MS) eine Mobilstation ist.

5. Verfahren nach einem der Ansprüche 1, 2, 3 oder 4, **dadurch gekennzeichnet, dass** das Telekommunikationsnetzwerk (PLMN) ein mobiles Kommunikationsnetzwerk ist.

6. Verfahren nach einem der vorhergehenden Ansprüche 1, 2, 3, 4 oder 5, **dadurch gekennzeichnet, dass** der Dekodierschlüssel, der zum Dekodieren der digitalen Übertragung berechtigt, an das Terminalgerät (MS) über das Telekommunikationsnetzwerk (PLMN) gesendet wird.

7. Verfahren nach einem der vorhergehenden. Ansprüche 1, 2, 3, 4, 5 oder 6, **dadurch gekennzeichnet, dass** Dateninformationen über die digitale Übertragung zu dem Terminalgerät (MS) mit Hilfe des Telekommunikationsnetzwerks (PLMN) übertragen wird.

8. Verfahren nach einem der vorhergehenden Ansprüche 1, 2, 3, 4, 5, 6 oder 7, **dadurch gekennzeichnet, dass** Dateninformation bezüglich der digitalen Übertragung an das Terminalgerät (MS) über die Empfangsanlage (STB) gesendet wird.

9. Verfahren nach einem der vorhergehenden Ansprüche 1, 2, 3, 4, 5, 6, 7 oder 8, **dadurch gekennzeichnet, dass** die aus den ausgewählten Diensten sich ergebenden Kosten in dem Empfangsserver (SC) definiert werden.

10. Verfahren nach einem der vorhergehenden Ansprüche 1, 2, 3, 4, 5, 6, 7, 8 oder 9, **dadurch gekennzeichnet, dass** die Kommunikation zwischen dem Terminalgerät (MS) und der Empfangsanlage (LCB) über eine drahtlose oder eine Draht-Datenübertragungsmethode implementiert wird.

11. Verfahren nach einem der vorhergehenden Ansprüche 1, 2, 3, 4, 5, 6, 7, 8, 9 oder 10, **dadurch gekennzeichnet, dass** die Kommunikation zwischen dem Terminalgerät (MS) und der Empfangsanlage (STB) über eine Bluetooth-Verbindung erfolgt.

12. Verfahren nach einem der vorhergehenden Ansprüche. 1, 2, 3, 4, 5, 6, 7, 8, 9, 10 oder 11, **dadurch gekennzeichnet, dass** Rückkopplungsinformationen bezüglich der digitalen Übertragung von dem Terminalgerät (MS) an den Empfangsserver (SC) und/oder den Serviceprovider (TV) zugesendet wird.

13. Verfahren nach einem der vorhergehenden Ansprüche 1, 2, 3, 4, 5, 6, 7, 8, 9, 10, 11 oder 12, **dadurch gekennzeichnet, dass** das mit der digitalen Übertragung verbundene Menü von der Empfangsanlage (STB) an das Terminalgerät (MS) in der WAP/WML-Form oder als Menüstruktur entsprechenden Typs mittels eines Protokolls oder einer Beschreibungssprache gesendet wird, die von dem Terminalgerät (MS) verstanden wird.

14. Verfahren nach einem der Ansprüche 1, 2, 3, 4, 5, 6, 7, 8, 9, 10; 11, 12 oder 13, **dadurch gekennzeichnet, dass** der Benutzer in dem Empfangsserver (SC) vor dem Senden der Information zu dem Serviceprovider (TV) zertifiziert wird.

15. Verfahren nach einem der vorhergehenden Ansprüche 1, 2, 3, 4, 5, 6, 7, 8, 9, 10, 11, 12, 13 oder 14, **dadurch gekennzeichnet, dass** der von dem Empfangsserver (SC) an den Serviceprovider (CV) zu sendenen Information die Digitalsignatur des Benutzer des Terminalgeräts (MS) und/oder des Empfangsservers hinzugefügt wird.

16. Verfahren nach einem der vorhergehenden Ansprüche 1, 2, 3, 4, 5, 6, 7, 8, 9, 10, 11, 12, 13, 14 oder 15, **dadurch gekennzeichnet, dass** die digitale Übertragung eine digitale Fernsehübertragung ist.

17. Verfahren nach einem der Ansprüche 1, 2, 3, 4, 5, 6, 7, 8, 9, 10, 11, 12, 13, 14, 15 oder 16, **dadurch gekennzeichnet, dass** die digitale Übertragung eine digitale Videoübertragung ist.

18. Verfahren nach einem der vorgehenden Ansprüche 1, 2, 3, 4, 5, 6, 7, 8, 9, 10, 11, 12, 13, 14, 15, 16 oder 17, **dadurch gekennzeichnet, dass** die digitale Übertragung eine digitale Radioübertragung ist.

## Revendications

1. Procédé de contrôle de la réception d'une transmission numérique et de réception d'informations supplémentaires liées à une transmission numérique dans un système de télécommunication comprenant un dispositif terminal (MS), un équipement de réception (STB) qui est utilisé pour recevoir une transmission numérique, une première connexion de télécommunication (CONN1) qui est disposée entre le dispositif terminal (MS) et l'équipement de réception (STB), un prestataire de service (TV) qui génère la transmission numérique, une seconde connexion de télécommunication (CONN2) par laquelle l'équipement de réception (STB) reçoit la transmission numérique du prestataire de service (TV), un serveur récepteur (SC) à partir duquel il existe une connexion au prestataire de service (TV), un réseau de télécommunication (PLMN) via lequel le serveur récepteur (SC) et le dispositif terminal (MS) communiquent l'un avec l'autre, dans lequel le procédé comprend les étapes consistant à :
envoyer des informations numériques du prestataire de service (TV) à l'équipement de réception (STB) ;
établir une connexion entre le dispositif terminal (MS) et l'équipement de réception (STB) ;
transmettre, à partir de l'équipement de réception (STB), le menu connecté à la transmission numérique et les informations d'identification univoques connectées à l'équipement de réception (STB) au dispositif terminal (MS) ;
envoyer, à partir du dispositif terminal (MS), les informations d'identification univoques connectées à l'équipement de réception (STB), les informations d'identification individualisant le dispositif terminal (MS) et les informations liées à la transmission numérique vers le serveur récepteur (SC) ;
transmettre, à partir du serveur récepteur (SC), les informations reçues du dispositif terminal (MS) vers le prestataire de service (TV) ;
dans le serveur récepteur (SC) ou le prestataire de service (TV), identifier l'utilisateur du dispositif terminal (MS) et vérifier si l'utilisateur a prédéterminé des droits pour la transmission numérique ; et en réponse à une vérification réussie,
envoyer, à partir du prestataire de service (TV), la clé de décodage permettant de décoder la transmission numérique vers le dispositif terminal (MS) de l'utilisateur ;
transférer, à partir du dispositif terminal (MS), la clé de décodage mentionnée ci-dessus à l'équipement de réception (STB) ;
décoder la transmission numérique reçue avec la clé de décodage mentionnée ci-dessus dans l'équipement de réception (STB) ; et
afficher les informations numériques reçues avec la clé de décodage mentionnée ci-dessus (STB) ou certains autres dispositifs qui lui sont reliés.

2. Procédé selon la revendication 1, **caractérisé en ce que** les informations d'identification univoques connectées à l'équipement de réception (STB) sont chiffrées et/ou signées.

3. Procédé selon la revendication 1, **caractérisé en ce que** la clé de décodage permettant de décoder la transmission numérique est chiffrée et/ou signée avant d'être envoyée au dispositif terminal (MS).

4. Procédé selon l'une quelconque des revendications précédentes 1, 2 ou 3, **caractérisé en ce que** le dispositif terminal (MS) est une station mobile.

5. Procédé selon l'une quelconque des revendications précédentes 1, 2, 3 ou 4, **caractérisé en ce que** le réseau de télécommunication (PLMN) est un réseau de communication mobile.

6. Procédé selon l'une quelconque des revendications précédentes 1, 2, 3, 4 ou 5, **caractérisé en ce que** la clé de décodage permettant de décoder la transmission numérique est envoyée au dispositif terminal (MS) par le biais du réseau de télécommunication (PLMN).

7. Procédé selon l'une quelconque des revendications précédentes 1, 2, 3, 4, 5 ou 6, **caractérisé en ce que** les données liées à la transmission numérique sont transmises au dispositif terminal (MS) par le biais du réseau de télécommunication (PLMN).

8. Procédé selon l'une quelconque des revendications précédentes 1, 2, 3, 4, 5, 6 ou 7, **caractérisé en ce que** les données liées à la transmission numérique sont transmises au dispositif terminal (MS) via l'équipement de réception (STB).

9. Procédé selon l'une quelconque des revendications précédentes 1, 2, 3, 4, 5, 6, 7 ou 8, **caractérisé en ce que** les coûts résultants des services sélectionnés sont définis dans le serveur récepteur (SC).

10. Procédé selon l'une quelconque des revendications précédentes 1, 2, 3, 4, 5, 6, 7, 8 ou 9, **caractérisé en ce que** la communication entre le dispositif terminal (MS) et l'équipement de réception (STB) est mis en oeuvre par un procédé de transmission de données sans fil ou câblé.

11. Procédé selon l'une quelconque des revendications précédentes 1, 2, 3, 4, 5, 6, 7, 8, 9 ou 10, **caractérisé en ce que** la communication entre le dispositif terminal (MS) et l'équipement de réception (STB) est mis en oeuvre par une connexion Bluetooth.

12. Procédé selon l'une quelconque des revendications précédentes 1, 2, 3, 4, 5, 6, 7, 8, 9, 10 ou 11, **caractérisé en ce que** les informations de retour liées à la transmission numérique sont envoyées du dispositif terminal (MS) au serveur récepteur (SC) et/ou au prestataire de service (TV).

13. Procédé selon l'une quelconque des revendications précédentes 1, 2, 3, 4, 5, 6, 7, 8, 9, 10, 11 ou 12, **caractérisé en ce que** le menu connecté avec la transmission numérique est envoyé de l'équipement de réception (STB) au dispositif terminal (MS) sous forme WAP/WML ou sous forme de structure de menu du type correspondant par un protocole ou un langage de description compris par le dispositif terminal (MS).

14. Procédé selon l'une quelconque des revendications précédentes 1, 2, 3, 4, 5, 6, 7, 8, 9, 10, 11, 12 ou 13, **caractérisé en ce que** l'utilisateur est autorisé dans le serveur récepteur (SC) avant que les informations ne soient envoyées au prestataire de service (TV).

15. Procédé selon l'une quelconque des revendications précédentes 1, 2, 3, 4, 5, 6, 7, 8, 9, 10, 11, 12, 13 ou 14, **caractérisé en ce que**, pour les informations à envoyer à partir du serveur récepteur (SC) au prestataire de service (TV), la signature numérique de l'utilisateur du dispositif terminal (MS) et/ou du serveur récepteur est ajoutée.

16. Procédé selon l'une quelconque des revendications précédentes 1, 2, 3, 4, 5, 6, 7, 8, 9, 10, 11, 12, 13, 14 ou 15, **caractérisé en ce que** la transmission numérique est utilisée pour indiquer une transmission télévisuelle numérique.

17. Procédé selon l'une quelconque des revendications précédentes 1, 2, 3, 4, 5, 6, 7, 8, 9, 10, 11, 12, 13, 14, 15 ou 16, **caractérisé en ce que** la transmission numérique est utilisée pour indiquer une transmission vidéo numérique.

18. Procédé selon l'une quelconque des revendications précédentes 1, 2, 3, 4, 5, 6, 7, 8, 9, 10, 11, 12, 13, 14, 15, 16 ou 17, **caractérisé en ce que** la transmission numérique est utilisée pour indiquer une transmission radio numérique.
